# EUROPEAN PATENT SPECIFICATION

(11) **EP 4 688 901 B1**
(45) Date of publication and mention of the grant of the patent: **16.09.2026**
(21) Application number: 23720744.4
(22) Date of filing: 06.04.2023
(51) Int. Cl.: C08G 18/75, C08G 18/42, C08G 18/34, C08G 18/08, C09D 5/20, C09D 175/06

(54) **PEELABLE COATING COMPOSITION AND METHOD OF PREPARING PEELABLE COATING**
ABZIEHBARE BESCHICHTUNGSZUSAMMENSETZUNG UND VERFAHREN ZUR HERSTELLUNG EINER ABZIEHBAREN BESCHICHTUNG
COMPOSITION DE REVÊTEMENT PELABLE ET PROCÉDÉ DE PRÉPARATION D'UN REVÊTEMENT PELABLE

(43) Date of publication of application: 11.02.2026
(73) Proprietor: Dow Global Technologies LLC, Midland, MI 48674 (US)
(72) Inventor: SHU, Shujun, Shanghai 200122 (CN); LING, Hua, Shanghai 201202 (CN)
(74) Representative: Beck Greener LLP
(86) International application number: PCT/CN2023/086560
(87) International publication number: WO 2024/207303

(56) References cited:
- CN-A- 110 591 539
- JP-A- 2018 184 522
- US-A1- 2003 072 948
- US-B1- 6 482 885

## Description

### FIELD

The present invention relates to a peelable coating composition and a method of preparing a peelable coating from the coating composition.

### INTRODUCTION

Peelable coatings (also referred to removable protective coatings), for a period of time, provide protection to surfaces against deterioration due to adverse environmental conditions, for example, contact with sharp objects, with objects bearing transferable color bodies, and with acid rain and ultraviolet (UV) radiation. Although the time interval during which the coatings must provide protection may be as long as months, or even years, it is further desirable that such temporary coatings are removable when the level of protection they provide is no longer needed. The need for removable protective coatings exists, for example, during the production, storage, and distribution of vehicles, ships, appliances, computers, furniture, sporting equipment, and the parts from which they are manufactured, as well as building materials. When the time comes to reveal the still pristine surface, it is highly desirable to be able to quickly and smoothly remove the entire coating to maintain a "just off the assembly line" appearance to the coated ships, leaving no residue, causing no damage to under layers, without recourse to labor intensive processes, use of any additional materials (e.g., solvents, acids, bases, and aqueous detergents), or generation of waste streams. Peelability properties of coatings are closely relate to the types of substrates that coatings are applied on. A coating composition may provide desirable peelability on a glass substrate, but usually fails for other substrates such as metals (optionally coated with polymers). Therefore, it is particularly challenging for a single peelable coating composition to provide good peelability for various substrates in different coating applications, such as glass, metals, and precoated surfaces (e.g., a steel substrate coated with a polyurethane coating). Additionally, as peelable coatings are widely used in outdoor applications, water resistance and peelability properties after UV exposure or raining become particularly important.

WO2008/063411A2 discloses a peelable protective coating composition for protecting exterior surfaces of automobiles and other products. The aqueous coating composition comprises an aqueous mixture or solution comprising a polyvinyl butyral film former and an extender, but the mixture or solution does not include a polyurethane and pealability properties of peelable coatings made therefrom after UV exposure are not evaluated.

US 2003/072948 Al discloses peelable coatings, suitable for various substrates such as automobiles or boats, which are based on aqueous compositions that contain glycerol as releasing (co)solvent and aqueous silylated polyurethane dispersions.

Moreover, some manufacturers and end-users require peelable coatings to be transparent. For furniture applications, transparent peelable coatings enable end-users to easily select the furniture with desired color and appearance (e.g., wood texture). For temporary protection of electronic devices (e.g., laptops), transparent peelable coatings are also desirable such that surface defects on the electronic devices when covered with the peelable coatings can still be visually inspected.

Therefore, it is desirable to provide a coating composition that provides protection of surfaces of various substrates from, for example, deleterious effects of exposure to UV or raining, while at the same time coating films made therefrom are transparent and easily removed as a single sheet, leaving no residue.

### SUMMARY

The present invention relates to an aqueous coating composition that can be applied to the surface of a substrate to form a transparent, peelable film (which is used interchangeable with "peelable coating") that provides protection to that surface against a variety of adverse environmental conditions, for example, UV exposure, yet is easily removable, preferably as a continuous sheet. The aqueous coating composition of the present invention can provide coatings (i.e., peelable coatings) made therefrom with good peelability from multiple types of substrates, for example, showing ratings of 4 or higher when peeling the coating from surfaces of glass, metals (such as tin), and polyurethane (PU) coated metals even after UV exposure. In the meanwhile, the coatings are transparent and have a high tensile strength (at least 8 megapascals (MPa)) and good water resistance (with ratings of 4 or higher). These properties can be measured according to the test methods described in the Examples section below.

In a first aspect, the present invention is an aqueous coating composition comprising:
(A) an aqueous polyurethane dispersion comprising a reaction product of components (i) and (ii):
   (i) an isocyanate component comprising an aliphatic or cycloaliphatic polyisocyanate comprising at least two isocyanate groups, and
   (ii) an isocyanate-reactive component comprising: (ii-a) a polyol comprising a lactone-based polyester polyol, (ii-b) an anionic emulsifier comprising at least one isocyanate-reactive group and an anionic group or potentially anionic group, and (ii-c) from zero to less than 1.0% by weight of a monofunctional polyalkylene ether containing one hydroxyl or amino group, based on the total weight of the isocyanate component and isocyanate-reactive component;
(B) an amphoteric surfactant having an isoelectric point at pH 3 to pH 8, that present in an amount of from 0.1% to 10.0% by solids weight, based on total solids weight of the aqueous coating composition; and
(C) a light absorber, a light stabilizer, or mixtures thereof.

In a second aspect, the present invention is a method of preparing a peelable coating. The method comprises:
(I) providing the aqueous coating composition of the first aspect,
(II) applying to the surface of a substrate the aqueous coating composition, and
(III) drying, or allowing to dry, the applied aqueous coating composition; thereby forming the peelable coating.

### DETAILED DESCRIPTION

Test methods refer to the most recent test method as of the priority date of this document when a date is not indicated with the test method number. References to test methods contain both a reference to the testing society and the test method number. The following test method abbreviations and identifiers apply herein: ASTM refers to ASTM International methods, ISO refers to International Organization for Standards, and JG/T refers to China Building & Construction Industry Standard (Recommended). Products identified by their tradename refer to the compositions available under those tradenames on the priority date of this document.

"And/or" means "and, or as an alternative." All ranges include endpoints unless otherwise indicated.

"Aqueous" dispersion herein means that particles dispersed in an aqueous medium. By "aqueous medium" herein is meant water and from zero to 30%, by weight based on the weight of the medium, of water-miscible compound(s) such as, for example, alcohols, glycols, glycol ethers, glycol esters, or mixtures thereof.

The aqueous coating composition of the present invention (also referred to as "peelable coating composition") comprises (A) an aqueous anionic polyurethane dispersion, desirably, an aqueous anionic, aliphatic polyurethane dispersion. The aqueous polyurethane dispersion comprises a reaction (e.g., addition polymerization reaction) product of (i) an isocyanate component and (ii) an isocyanate-reactive component described below. The aqueous polyurethane dispersion may also comprise, or be free of, component (iii) an external emulsifier.

An "isocyanate" is a compound that contains one or more pendant isocyanate group (e.g., an isocyanate that contains more than one isocyanate group per molecule is a polyisocyanate, an isocyanate that contains exactly two isocyanate groups is a diisocyanate). Unless specified, the term isocyanate as used herein includes monomeric isocyanates and prepolymeric isocyanates.

The isocyanate component (i) useful in the present invention comprises one or more aliphatic polyisocyanates comprising at least two isocyanate (NCO) groups, one or more cycloaliphatic polyisocyanates comprising at least two NCO groups, or mixtures thereof. An "aliphatic polyisocyanate" refers to a polyisocyanate that contains no aromatic ring and that contains a linear or branched alkylene residue that typically has 3 to 16 carbon atoms or 4 to 12 carbon atoms. That is, the "aliphatic polyisocyanate" used herein excludes a "cycloaliphatic polyisocyanate" described later. A "cycloaliphatic polyisocyanate" refers to a polyisocyanate that contains a cycloalkylene residue that typically has 4 to 18 carbon atoms or 6 to 15 carbon atoms. Desirably, the isocyanate component (i) is a cycloaliphatic polyisocyanate. The isocyanate component (i) may have an average NCO functionality of at least 2, and can be 2 to 10, 2 to 8, or 2 to 6. Cycloaliphatic diisocyanates refer to both cyclically and aliphatically bound NCO groups, such as isophorone diisocyanate and diisocyanatodicyclohexylmethane (H₁₂MDI). Examples of aliphatic and cycloaliphatic polyisocyanates include hexamethylene diisocyanate (HDI), cyclohexane diisocyanate, methylcyclohexane diisocyanate, ethylcyclohexane diisocyanate, propylcyclohexane diisocyanate, methyldiethylcyclohexane diisocyanate, propane diisocyanate, butane diisocyanate, pentane diisocyanate, hexane diisocyanate, heptane diisocyanate, octane diisocyanate, nonane diisocyanate, nonane triisocyanate, such as 4-isocyanatomethyl-1,8-octane diisocyanate (TIN), decane di- and triisocyanate, undecane di- and triisocyanate and dodecane di- and triisocyanate, isophorone diisocyanate (IPDI), diisocyanatodicyclohexylmethane (H₁₂MDI), 2-methylpentane diisocyanate (MPDI), 2,2,4-trimethylhexamethylene diisocyanate/2,4,4-trimethylhexamethylene diisocyanate (TMDI), norbornane diisocyanate (NBDI); dimers of these monomeric polyisocyanates; trimers of these monomeric polyisocyanates; and mixtures thereof. Desirably, the isocyanate component comprises or consists of one or more cycloaliphatic diisocyanates, more desirably, IPDI. A mixture of two or more aliphatic polyisocyanates, two or more cycloaliphatic polyisocyanates, or a mixture of the aliphatic polyisocyanate and the cycloaliphatic polyisocyanate can be used provided that the average functionality of the isocyanate component (i) is 2 or higher. The isocyanate component (i) may comprise the monomeric aliphatic or cycloaliphatic polyisocyanate, and a prepolymer of the monomeric aliphatic or cycloaliphatic polyisocyanate comprising at least two isocyanate groups (which is used interchangeable with "isocyanate prepolymer" and "prepolymeric isocyanate"), or mixtures thereof. The isocyanate prepolymer can be obtained by reacting the above described polyisocyanate with (ii) an isocyanate-reactive component described below in the presence of an internal emulsifier described below, with the proviso that the isocyanate prepolymer still comprises at least two isocyanate groups. Then the isocyanate prepolymer may further react with the isocyanate-reactive component to produce the polyurethane dispersion (PUD).

The isocyanate-reactive component (ii-a) a polyol comprising a lactone-based polyester polyol, and (ii-b) an anionic emulsifier, and optionally, one or more of components (ii-c) a monofunctional polyalkylene ether, (ii-d) a chain extender, and (ii-e) a polyhydric alcohol; all described below. Desirably, the isocyanate-reactive component (ii) comprises, or can consist of, components (ii-a), (ii-b), and (ii-d) described below.

The isocyanate-reactive component (ii) useful in the present invention comprises component (ii-a) a polyol comprising one or more lactone-based polyester polyols having at least two hydroxyl (OH) groups. The "polyol" herein refers to a compound having two or more hydroxyl groups per molecule and a number average molecular weight of 500 grams per mole (g/mol) or more. The lactone-based polyester polyols useful in the present invention may have a number average molecular weight of 500 g/mol to 5,000 g/mol, and can be 500 g/mol or more, 600 g/mol or more, 800 g/mol or more, 1,100 g/mol or more, 1,500 g/more or more, even 2,000 g/mol or more while at the same time is 5,000 g/mol or less, and can be 4,500 g/mol or less, 4,000 g/mol or less, 3,500 g/mol or less, or even 3,000 g/mol or less, desirably, 2,000 g/mol to 3,000 g/mol. The molecular weight of a polyol can be measured by Gel Permeation Chromatography (GPC) or calculated by 56100 (mg/mol)*f/ OHV (mg KOH/g), where OHV represents hydroxyl number of the polyol and *f* represents functionality of the polyol. The lactone-based polyester polyol may have a hydroxyl number of from 20 to 225 mg KOH/g, and can be 20 mg KOH/g or more, 30 mg KOH/g or more, even 40 mg KOH/g or more while at the same time is generally 225 mg KOH/g or less, and can be 200 mg KOH/g or less, 175 mg KOH/g or less, or even 150 mg KOH/g or less. The hydroxyl number (OHV) is defined as the number of milligrams of potassium hydroxide (KOH) that is chemically equivalent to the activity of one gram of a polyol and can be measured according to ASTM D 4274. The lactone-based polyester polyols can be homopolymers or copolymers of lactones, desirably, terminal hydroxyl-functional addition products of lactones with suitable difunctional initiator molecules. Suitable difunctional initiator molecules may include compounds represented by the general formula HO-(CH₂)z-OH, where z is an integer from 2 to 20 and one hydrogen atom of a methylene unit may also be replaced by a C₁ to C₄ alkyl radical; or mixtures thereof. Exemplary lactones include ε-caprolactone, methyl-ε-caprolactone, ß-propiolactone, γ-butyrolactone, or mixtures thereof. Desirably, the lactone-based polyester polyol is a polycaprolactone polyol. The polycaprolactone polyol can be obtained by ring-opening polymerization of ε-caprolactone monomer under the catalysis of metal anion complex catalysts by controlling polymerization conditions. The lactone-based polyester polyol can be present at a concentration of from 80% to 100%, and can be 80% or more, 82% or more, 85% or more, 88% or more, 90% or more, 92% or more, 94% or more, even 95% or more while at the same time is generally 100% or less, and can be 99% or less, 98% or less, 96% or less, 95% or less, desirably, 95% to 100%, based on the total weight of the polyols in the isocyanate-reactive component (ii). Alternatively, the lactone-based polyester polyol may be present in an amount of 80% to 99%, and can be 80% or more, 82% or more, 85% or more, even 87% or more while at the same time is generally 99% or less, 98% or less, 96% or less, or even 95% or less, desirably, 85% to 95%, by weight based on the total weight of the isocyanate-reactive component (ii).

The isocyanate-reactive component (ii) useful in the present invention comprises (ii-b) an anionic emulsifier comprising at least one isocyanate-reactive group and at least one anionic group or potentially anionic group (hereinafter also as "internal emulsifier"). The internal emulsifier can act as a copolymerizable comonomer. The potentially anionic group refers to a group which can be converted into an anionic group, which is typically conducted by adding a tertiary amine such as triethyl amine. The expression "anionic group or potentially anionic group" is abbreviated to "(potentially) anionic group" hereinafter. The internal emulsifier can be properly selected so that the molar content of the (potentially) anionic groups is 30 to 1,000 millimoles per kilogram (mmol/kg) of the isocyanate component (i) and the isocyanate-reactive component (ii), and can be 30 mmol/kg or more, 50 mmol/kg or more, 80 mmol/kg or more, even 100 mmol/kg or more while at the same time is 1,000 mmol/kg or less, 800 mmol/kg or less, 500 mmol/kg or less, 400 mmol/kg or less, 350 mmol/kg or less, or even 300 mmol/kg or less, desirably, 100 to 400 mmol/kg, based on the total weight (i.e., combined weight) of the isocyanate component (i) and isocyanate-reactive component (ii) (i.e., the total weight of reactants for preparing the polyurethane dispersion). The (potentially) anionic groups may comprise anionic groups such as sulfonate, carboxylate, and phosphate in the form of their alkali metal or ammonium salts. Potentially anionic groups comprise those which can be converted by simple neutralization or hydrolysis reactions into the above mentioned anionic groups, for example, carboxylic acid groups or anhydride groups. The anionic internal emulsifiers may include aliphatic, cycloaliphatic, araliphatic or aromatic carboxylic acids, carbonic acids, and sulfonic acids, which independently bear at least one alcoholic hydroxyl group or at least one primary or secondary amino group. Desirably, the internal emulsifier can be a dihydroxyalkylcarboxylic acid having from 3 to 10 carbon atoms such as dihydroxymethyl propionic acid (DMPA) and dimethylolbutanoic acid (DMBA), a dihydroxysulfonic acid, a dihydroxyphosphonic acid such as 2,3-dihydroxypropanephosphonic acid, or mixtures thereof. More desirably, the internal emulsifier is DMPA. If the internal emulsifier having potentially anionic groups are used, they may be converted into the anionic form before, during, but desirably after the isocyanate addition polymerization. Desirably, the sulfonate or carboxylate groups are present in the internal emulsifier.

The isocyanate-reactive component (ii) useful in the present invention may comprise, desirably, be substantially free of, (ii-c) a monofunctional polyalkylene ether that contains one hydroxy or amino group. The monofunctional polyalkylene ether comprises a polyalkylene oxide chain that may comprise ethylene oxide units, propylene oxide units, butylene oxide units, or combinations thereof. Suitable monofunctional polyalkylene ethers may include, for example, poly(ethylene glycol) monomethyl ethers, poly(propylene glycol) monomethyl ethers, or mixtures thereof. "Substantially free" means that the monofunctional polyalkylene ether is present in an amount of from zero to less than 1% by weight, less than 0.6% by weight, less than 0.5% by weight, less than 0.1% by weight, or even zero, based on the total weight of the isocyanate component (i) and isocyanate-reactive component (ii).

The isocyanate-reactive component (ii) useful in the present invention may comprise (ii-d) one or more chain extenders selected from an isocyanate-reactive diamine, an amine compound having another isocyanate-reactive group, or mixtures thereof. The chain extenders usually have a molecular weight of 32 g/mol to less than 500 g/mol, 50 g/mol to 400 g/mol, or 50 g/mol to 200 g/mol. The chain extender may be selected from an aminated polyether diol; ethanolamine; piperazine; 2,5-dimethylpiperazine; diamines such as ethylenediamine, diaminoethane, diaminopropanes such as 1,2-propanediamine, diaminobutanes, diaminohexanes, piperazine, amino-3-aminomethyl-3,5,5-trimethylcyclohexane (isophoronediamine, IPDA), 4,4'-diaminodicyclohexylmethane, 1,4-diaminocyclohexane, aminoethylethanolamine, and mixtures thereof; or combinations thereof. Desirably, the chain extender is 1,2-propanediamine. The concentration of the chain extender may be in a range of zero to 10%, and can be zero or more, 0.1% or more, 0.5% or more, 1.0% or more, 2.0% or more, 3.0% or more, even 3.5% or more while at the same time is generally 10% or less, and can be 8.0% or less, 6.0% or less, 5.0% or less, or even 4.0% or less, desirably, 3.0% to 5.0%, by weight based on the total weight of the isocyanate component (i) and isocyanate-reactive component (ii).

The isocyanate-reactive component (ii) useful in the present invention may comprise (ii-e) one or more polyhydric alcohols, typically having a molecular weight of less than 500 g/mol. The polyhydric alcohols include a C₂-C₁₆ aliphatic polydric alcohol, a C₆-C₁₅ cycloaliphatic polyhydric alcohol, or mixtures thereof. Examples of suitable polyhydric alcohols include ethylene glycol, 1,2-propanediol, 1,3-propanediol, 1,3-butanediol, 1,4-butene diol, 1,4-butynediol, 1,5-pentanediol, neopentylglycol, bis(hydroxy-methyl) cyclohexanes such as 1,4-bis(hydroxymethyl)cyclohexane, 2-methylpropane-1,3-diol, methylpentanediols, diethylene glycol, triethylene glycol, tetraethylene glycol, polyethylene glycol, dipropylene glycol, polypropylene glycol, dibutylene glycol, polybutylene glycols, and mixtures thereof. Desirably, the polyhydric alcohols have the structure represented by general formula of HO-(CH₂)x-OH, where x is an integer from 1 to 20 or an even integer from 2 to 20. The concentration of (ii-d) the polyhydric alcohol may be zero to 5%, and can be less than 5%, less than 4%, less than 1%, less than 0.5%, or even zero, by weight based on the total weight the isocyanate component (i) and isocyanate-reactive component (ii).

The above components for preparing the polyurethane dispersion are present in amounts to provide a molar ratio of total isocyanate groups to total isocyanate-reactive groups within a range of from 0.5:1 to 2:1, from 0.8:1 to 1.5:1, from 0.9:1 to 1.2:1, or such molar ratio can be 1:1.

The aqueous polyurethane dispersion useful in the present invention may comprise or be free of an external emulsifier (also as "external surfactant") that is other than the internal emulsifier described above or the amphoteric surfactant described below. The "external emulsifier" refers to an ionically or nonionically emulsifier that is not covalently bonded to the backbone chain within the polyurethane particles dispersed in the aqueous medium in the polyurethane dispersion, especially via the urethane bond derived from the reaction between an isocyanate group and an isocyanate-reactive group (such as a hydroxyl group) so as to stabilize the polyurethane dispersion. The external emulsifiers typically do not comprise any copolymerizable groups or isocyanate-reactive groups. The external emulsifiers may be cationic, anionic, or nonionic, and is desirably anionic. Suitable examples of the external emulsifiers may include sulfates of ethoxylated phenols such as poly(oxy-1,2-ethanediyl) α-sulfo-ω-(nonylphenoxy) salt; alkali metal fatty acid salts such as alkali metal oleates and stearates; alkali metal C₁₂-C₁₆ alkyl sulfates such as alkali metal lauryl sulfates; amine C₁₂-C₁₆ alkyl sulfates such as amine lauryl sulfates, more desirably triethanolamine lauryl sulfate; alkali metal C₁₂-C₁₆ alkylbenzene sulfonates such as branched and linear sodium dodecylbenzene sulfonates; amine C₁₂-C₁₆ alkyl benzene sulfonates such as triethanolamine dodecylbenzene sulfonate; anionic and nonionic fluorocarbon emulsifiers such as fluorinated C₄-C₁₆ alkyl esters and alkali metal C₄-C₁₆ perfluoroalkyl sulfonates; organosilicon emulsifiers such as modified polydimethylsiloxanes. Desirably, the external emulsifier is sodium lauryl sulfate. The amount of the external emulsifier may be in a range of zero to 10%, and can be zero or more, 0.1% or more, 0.5% or more, 1.0% or more, 2.0% or more, 3.0% or more, 4.0% or more, even 5.0% or more while at the same time is generally 10% or less, and can be 9% or less, 8.0% or less, 7.5% or less, 7% or less, or 6.5% or less, by weight based on the total weight of the isocyanate component (i) and isocyanate-reactive component (ii).

The aqueous polyurethane dispersion useful in the present invention can be prepared according to the known processes, desirably by the "acetone process" or the "prepolymer mixing process." The general procedure is first to prepare a prepolymer or the polyurethane optionally in an inert organic solvent and then to disperse the prepolymer or the polyurethane in water. The prepolymer can be further polymerized to the polyurethane with the water or by adding the chain extender described above such as the diamine. The polyurethane dispersion prepared by using an anionic internal emulsifier is also known as an internally emulsified polyurethane dispersion, where a polyurethane dispersion that is stabilized through incorporation of anionically hydrophilic pendant groups within the polyurethane particles dispersed. A typical process for preparing such polyurethane (PU) dispersion may comprise the steps of (I) reacting the polyisocyanate or the isocyanate prepolymer with (ii-a) the polyols described above and (ii-b) the anionic internal emulsifier, and optionally further adding a tertiary amine (e.g., triethyl amine) so as to convert potential anionic groups into anionic groups in the case of the anionic internal emulsifier comprising potentially anionic groups (such as the carboxylic acid groups); thereby forming a PU prepolymer comprising pendant anionic groups attached to the PU chain; (II) dispersing the PU prepolymer into an aqueous solvent (e.g. water), with the anionic group attached to the PU chain as a main emulsifier, optionally with the assistance of the external emulsifier in this step; and optionally (III) reacting the resulting emulsion with additional isocyanate-reactive component comprising at least two isocyanate-reactive groups (including, for example, the chain extender) to form the anionic internally emulsified polyurethane dispersion.

The polyurethane particles in the aqueous polyurethane dispersion may be in a range of 30 nanometers (nm) to 150 nm, from 40 nm to 120 nm, or from 50 to 80 nm, as measured by a Brookhaven BI-90 Plus Particle Size Analyzer.

The aqueous polyurethane dispersion useful in the present invention also comprises water. The polyurethane dispersion may have a solids content of from 20% to 65%, from 25% to 60%, or from 30% to 50%, by weight based on the weight of the aqueous polyurethane dispersion.

The aqueous polyurethane dispersion may be present in the aqueous coating composition at a concentration of from 60% to 98% by solids weight, and can be 65% or more, 70% or more, 74% or more, 75% or more, 80% or more, 82% or more, 83% or less, 85% or more, even 90% or more while at the same time is generally 98% or less, and can be 97% or less, 96% or less, 95% or less, 992% or less, or even 90% or less by solids weight, based on total solids weight of the aqueous coating composition.

The aqueous coating composition of the present invention comprises (B) one or more amphoteric surfactants (also as "amphiphilic surfactants"). Amphoteric surfactants bear both acidic and basic functionality and are well known in the art, for example, Amphoteric Surfactants, ed. B.R. Bluestein and C.L. Hilton, Surfactant Series Vol. 12 Marcel Dekker NY, NY (1982). The amphoteric surfactants useful in the present invention may include those having an isoelectric point at pH = 3 to pH = 8. The isoelectric point occurs at a characteristic pH for each amphoteric surfactant, and is that pH at which the negative charge on the surfactant molecule is exactly balanced by the positive charge on that same molecule.

The amphoteric surfactants useful in the present invention may include those having weakly acidic functionality, especially carboxy functionality. The carboxy moieties may be present in fully protonated (carboxylic acid) form, as salts with at least one type of cation, and as mixtures of protonated and salt forms. The carboxylic acid moieties may also be part of inner salts. As used herein, inner salt refers to a molecule bearing an anionically charged moiety, the counter ion (i.e., cation) for which is also a moiety attached to the that same molecule.

Suitable amphoteric surfactants useful in the present invention may include, for example, aminocarboxylic acids, amphoteric imidazoline derivatives, betaines, and macromolecular ampholytes. Amphoteric surfactants from any of these classes may be further substituted with fluorocarbon substituents, siloxane substituents, or combinations thereof. Additional useful amphoteric surfactants can be found in Amphoteric Surfactants, ed. B.R. Bluestein and C.L. Hilton, Surfactant Series Vol. 12 Marcel Dekker NY, NY (1982).

Aminocarboxylic acids useful as the amphoteric surfactants in the present invention may have carboxy moieties present in either protonated form or in carboxylate form. Where more than one carboxy group is present on a molecule, those carboxy groups may all be in protonated form, in carboxylate form, or they may be present as some mixture of protonated and carboxylate forms. Furthermore, the ratio of protonated to unprotonated carboxy moieties may vary from one molecule to another, otherwise identical, molecule in a given system. Cations present as counter ions for the carboxylate moieties include cations of lithium, sodium, potassium, amines (i.e., ammonium cations derived from protonation or other quaternary substitution of amines), zinc, zirconium, calcium, magnesium, and aluminum. Any of the aminocarboxylic acids may have amino moieties present in either protonated (ammonium) or free amine form (i.e., as deprotonated primary, secondary, or tertiary amine). Where more than one amino group is present on a molecule, those amino groups may all be in protonated form, in free amine form, or they may be present as some mixture of protonated and free amine forms. The ratio of protonated to unprotonated amine moieties may vary from one molecule to another, otherwise identical, molecule in a given system. Anions present as counter ions for the ammonium moieties include chloride, bromide, sulfate, carbonate, hydroxide, formate, acetate, propionate and other carboxylate anions.

Suitable aminocarboxylic acids useful as the amphoteric surfactants in the present invention may include, for example, α-aminocarboxylic acids having the general structure of R₁-NH-CH₂COOH, where R₁ is a C₄-C₂₀ linear or branched, alkyl, alkenyl, or fluoro or silicone functional hydrophobe group; and β-aminocarboxylic acids having the general structure of R₁-NH-CH₂CH₂COOH and R₁N(CH₂CH₂COOH)₂; where R₁ is as described above for α-aminocarboxylic acids. β-aminocarboxylic acids are available from Henkel Corporation, King of Prussia, PA., under the name DERIPHAT^{™}. Unless otherwise stated, the DERIPHAT ampholytes have the general formula R₂-NHCH₂CH₂COOH, where R₂ is residue of coconut fatty acids, residue of tallow fatty acids, lauric acid, myristic acid, oleic acid, palmitic acid, stearic acid, linoleic acid, other C₄-C₂₀ linear or branched, alkyl, alkenyl, and mixtures thereof. Examples of suitable aminocarboxylic acids useful in the present invention include sodium-N-coco-β-aminopropionate; N-coco-β-aminopropionic acid; N-lauryl/myristyl-(3-aminopropionic acid; disodium-N-tallow-β-iminodipropionate, R₂N(CH₂CH₂COONa)₂; disodium-N-lauryl-β-iminodipropionate; and partial sodium salt of N-lauryl-β-iminodipropionic acid, and R₂N(CH₂CH₂COOH)(CH₂CH₂COONa). Useful polyaminocarboxylic acids include R₃C(=O)NHC₂H₄(NHC₂H₄)_{y}HCH₂COOH and R₃-substituted ethylenediaminetetraacetic acid (EDTA), where R₃ is C₄-C₂₀ linear or branched, alkyl or alkenyl; and y is 0 to 3.

Amphoteric imidazoline derivatives useful as the amphoteric surfactants in the present invention may include those derived from variously substituted 2-alkyl-2-imidazolines and 2-alkenyl-2-imidazolines which have nitrogen atoms at the 1 and 3 positions of the five-membered ring and a double bond in the 2,3 position. The alkyl or alkenyl group may be a C₄-C₂₀ linear or branched chain. The amphoteric imidazoline derivatives are produced via reactions in which the imidazoline ring opens hydrolytically under conditions allowing further reaction with such alkylating agents as sodium chloroacetate, methyl (meth)acrylate, ethyl (meth)acrylate, and (meth)acrylic acid. Examples of suitable amphoteric surfactants derived from the reaction of 1-(2-hydroxyethyl)-2-(R₄)-2-imidazolines with acrylic acid or acrylic acid esters, where R₄ is residue of coconut fatty acids, include cocoamphocarboxypropionic acid; R₄-C(=O)NHCH₂CH₂N(CH₂CH₂OH)(CH₂CH₂COONa); cocoamphopropionate; R₄-C(=O)NHCH₂CH₂N(CH₂CH₂COOH)(CH₂CH₂OCH₂CH₂COOH); R₄-C(=O)NHCH₂CH₂N(CH₂CH₂COONa)(CH₂CH₂OCH₂CH₂COONa); cocoamphoglycinate, R₄-C(=O)NHCH₂CH₂N(CH₂CH₂OH)(CH₂COONa); cocoamphocarboxypropionate; coamphocarboxyglycinate; and [R₄-C(=O)NHCH₂CH₂N⁺(CH₂CH₂OH)(CH₂COONa)₂]OH.

Betaines useful as the amphoteric surfactants in the present invention refer to surface-active inner salts containing at least one quaternary ammonium cation and at least one carboxy anion. The nomenclature for betaines derives from the single compound (trimethylammonio)acetate which is called betaine and exists as an inner salt. Suitable betaines useful as the amphoteric surfactants in the present invention may include, for example, compounds of the general formulae: R₃CONHCH₂CH₂CH₂N⁺(CH₃)₂CH₂COO⁻; R₃-O-CH₂-N⁺(CH₃)₂CH₂COO⁻; and R₅N⁺(CH₃)₂CH₂COO⁻; where R₅ is a C₄-C₂₀ linear or branched, alkyl, alkenyl, or fluoro or silicone functional hydrophobe group. Specific examples of betaines include N-dodecyl-N,N-dimethylglycine and cocamidopropyl betaine, and MONATERIC^{™} CAB and MIRANOL^{™} CM-SF available from Solvay Chemicals.

Typically, when fluorocarbon substituents are attached to the amphoteric surfactants described above, those substituents are perfluoroalky groups, branched or unbranched, having 6 to 18 carbon atoms. However, these substituents may instead be partially fluorinated. They may also bear aryl functionality. Examples of suitable fluorocarbon amphoteric surfactants include fluorinated alkyl FLUORAD^{™} FC100 available from 3M and fluorinated alkyl ZONYL^{™} FSK available from DuPont.

Typical siloxane functional amphoteric surfactants may have the structures: 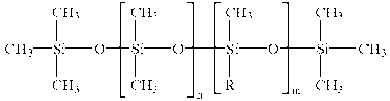 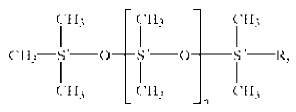 where R represents an amphoteric moiety, n is in a range of 3 to 50, and m + n is in a range of 3 to 50. An example is the polyalkyl betaine polysiloxane copolymer ABIL^{™} B9950 available from Goldschmidt Chemical Corporation.

Macromolecular amphoteric surfactants useful in the present invention may include, for example, proteins, protein hydrolysates, derivatives of protein hydrolysates, starch derivatives, and synthetic amphoteric oligomers and polymers, such as those described in Chapter 5 of Amphoteric Surfactants, ed. B.R. Bluestein and C.L. Hilton, Surfactant Series Vol. 12 Marcel Dekker, NY, 1982. Of particular utility are those macromolecular ampholytes bearing carboxy functionality.

The amphoteric surfactant may be present in the aqueous coating composition at a concentration of from 0.1% to 10.0% by solids weight, and can be 0.1% or more, 0.2% or more, 0.5% or more, even 1.0% or more while at the same time is generally 10% or less, and can be 9.0% or less, 8.0% or less, 7.5% or less, 7.0% or less, 6.5% or less, 5.0% or less, 4.0% or less, or even 3.0% or less, desirably, 1.0% to 3.0%, by solids weight based on total solids weight of the aqueous coating composition.

The aqueous coating composition of the present invention also comprises (C) a light absorber, a light stabilizer, or mixtures thereof, desirably, an ultraviolet (UV) light absorber, a UV light stabilizer, or mixtures thereof. The light absorber and the light stabilizer may be selected from hindered amines; benzophenones; benzophenone derivatives such as those described in Industrial Photoinitiators: A Technical Guide by Green, W. Arthur; CRC Press of the Taylor & Francis Group, 2010, ISBN 978-1-4398-2745-1 (Paperback); triazines; oxanilides; benzotriazoles, specifically hydroxyphenyl benzotriazoles compounds, a number of which are available from BASF under the trademark "TINUVIN"; or mixtures thereof. A typical example of benzotriazoles is 2-(2'-hydroxy-5'-methylphenyl) benzotriazoles, desirably, TINUVIN 1130. Examples of suitable UV light stabilizers include Bis-(1-octyloxy-2,2,6,6-tetramethyl-4-piperidinyl) sebacate (such as TINUVIN 123) and 2,4-bis[N-Butyl-N-(1-cyclohexyloxy-2,2,6,6-tetramethylpiperidin-4-yl)amino]-6-(2-hydroxyethylamine)-1,3,5-triazine (such as TINUVIN 152). The light absorber and/or the light stabilizer (C) in the aqueous coating composition may be present at a concentration of 0.1% to 15% by solids weight, and can be 0.1% or more, 0.2% or more, even 0.5% or more while at the same time is generally 15% or less, and can be 12% or less, 10% or less, 5% or less, or even 3% or less, desirably, 0.5% to 3% by solids weight, based on total solids weight of the aqueous coating composition.

The aqueous coating composition of the present invention may comprise or be free of (D) one or more pigments. The term "pigments" includes opacifying pigments, colorants, and special effects pigments. The term "opacifying pigments" herein specifically excludes organic extender particles, which particles comprise, when dry, one or more voids described below (i.e., the term "opacifying pigments" herein excludes opaque polymers described below). Opacifying pigments herein encompass inorganic pigment particles that scatter essentially all wavelengths of visible light without a high degree of absorption, such as, for example, titanium dioxide. The term "colorants" herein encompasses inorganic and organic colorants and includes both color imparting pigments and dyes. The term "special effects pigments" includes metal effect pigments, transparent effect pigments, thermochromic pigments, photochromic pigments, and luminescent pigments such as fluorescent pigments and phosphorescent pigments. The pigments may be present in an amount without compromising properties of coating films made from the aqueous coating composition, particularly, peelability and transparency properties described below. For example, the aqueous coating composition may comprise the pigment at a concentration of less than 2% by solids weight, and can be less than 1.8%, less than 1.5%, even less than 1.2%, desirably, less than 1%, less than 0.5%, less than 0.1% by solids weight, or even zero, based on total solids weight of the aqueous coating composition.

The pigments useful in the present invention may comprise one or more opacifying pigments, colorants, or special effects pigments. Opacifying pigments include inorganic pigment particles that scatter essentially all wavelengths of visible light without a high degree of absorption. Specific examples of opacifying pigments include titanium dioxide (TiO₂); metal oxides such as zinc oxide, tin oxide, antimony oxide, zirconium oxide, and lead oxide; zinc sulfide; and lithopone: or mixtures thereof. Desirably, the amount of the opacifying pigments is less than 1%, less than 0.5%, less than 0.1%, or even zero, by solids weight based on total solids weight of the aqueous coating composition.

The colorants useful in the present invention may include one or more of colored pigments and dyes, and black pigments. The colorant particles include inorganic and organic colorant particles. Typically, the colorant particles have average particle diameters in a range of from 10 nm to 50 micrometers (µm), desirably in a range of 20 nm to 5 µm, and more desirably, in a range of from 40 nm to 2 µm. Soluble dyes may also be used. Suitable inorganic colorant particles may include, for example, iron oxide pigments such as goethite, lepidocrocite, hematite, maghemite, and magnetite; chromium oxide pigments; cadmium pigments such as cadmium yellow, cadmium red, and cadmium cinnabar; bismuth pigments such as bismuth vanadate and bismuth vanadate molybdate; mixed metal oxide pigments such as cobalt titanate green; chromate and molybdate pigments such as chromium yellow, molybdate red, and molybdate orange; ultramarine pigments; cobalt oxide pigments; nickel antimony titanates; lead chrome; blue iron pigments; and carbon black. One group of preferred inorganic colorant particles is selected from bismuth pigments; mixed metal oxide pigments; chromate and molybdate pigments; ultramarine pigments; cobalt oxide pigments; nickel antimony titanates; lead chrome; blue iron pigments; and carbon black. Suitable organic colorant particles may include, for example, azo pigments, monoazo pigments, diazo pigments, azo pigment lakes, β-naphthol pigments, naphthol AS pigments, benzimidazolone pigments, diazo condensation pigment, metal complex pigments, isoindolinone, and isoindoline pigments, polycyclic pigments, phthalocyanine pigments, quinacridone pigments, perylene and perinone pigments, thioindigo pigments, anthrapyrimidone pigments, flavanthrone pigments, anthanthrone pigments, dioxazine pigments, triarylcarbonium pigments, quinophthalone pigments, diketopyrrolo pyrrole pigments, and mixtures thereof.

The special effects pigment useful in the present invention can be transparent effects pigments such as transparent iron oxide.

The aqueous coating composition of the present invention may optionally comprise minor quantities of (E) one or more fillers. Fillers herein include organic and inorganic filler particles (that are different from (D) the pigment described above) and that do not impart the primary color or hiding properties to a composition in which they are included. The amount of the fillers may be less than 1%, and can be less than 0.5%, less than 0.1%, or even zero, by solids weight based on total solids weight of the aqueous coating composition. Desirably, the aqueous coating composition is free of the fillers. Suitable inorganic fillers may include, for example, metal oxides such as aluminum oxide, silicon oxide; calcium carbonate, calcium sulfate, barium sulfate, mica, clay, calcined clay, feldspar, nepheline syenite, wollastonite, diatomaceous earth, magnesium silicate, alumina silicates, talc, and combinations thereof. Organic fillers may include, for example, polymeric particles which contain one or more void when dry, polymeric particles containing no void, or mixtures thereof. The polymeric particles containing one or more void when dry typically are core-shell polymeric particles where the polymeric particles comprise, when dry, at least one void (often referred to as "opaque polymer"), such as ROPAQUE^{™} Ultra E opaque polymers commercially available from The Dow Chemical Company (ROPAQUE is a trademark of The Dow Chemical Company). The polymeric particles containing no void may have an average particle size of from 1 to 20 µm according to ASTM E2651-10, typically affording matting effects to a composition. Such fillers may include, for example, polyethylene (PE) wax such as ULTRALUBE^{™} E-340 PE wax emulsion available from The Keim-Additive Co., CERAFLOUR^{™} 929 micronized PE wax available from BYK Additives and Instruments, DEUTERON^{™} MK polyurea matting agent available from Deuteron Co., or mixtures thereof.

The aqueous coating composition of the present invention may comprise or be free of one or more defoamers. "Defoamers" herein refers to chemical additives that reduce and hinder the formation of foam. Defoamers may be silicone-based defoamers, mineral oil-based defoamers, ethylene oxide/propylene oxide-based defoamers, alkyl polyacrylates, or mixtures thereof. Suitable commercially available defoamers include, for example, TEGO^{™} Airex 902 W and TEGO Foamex 1488 polyether siloxane copolymer emulsions both available from Evonik Industrials, BYK^{™}-024 silicone defoamer available from BYK, NOPCO^{™} NDW and NXZ mineral oil defoamers available from San Nopco, DOWSIL^{™} 109F and 106F defoamers available from The Dow Chemical Company (DOWSIL is a trademark of The Dow Chemical Company), or mixtures thereof. The defoamer may be present at concentration of from zero to 1%, from 0.01% to 0.8%, or from 0.1% to 0.6%, by weight based on total solids weight of the aqueous coating composition.

The aqueous coating composition of the present invention may comprise or be free of one or more thickeners, also known as "rheology modifiers." The thickeners may include polyvinyl alcohol (PVA), clay materials, acid derivatives, acid copolymers, urethane associate thickeners (UAT), polyether urea polyurethanes (PEUPU), polyether polyurethanes (PEPU), or mixtures thereof. Examples of suitable thickeners include alkali swellable emulsions (ASE) such as sodium or ammonium neutralized acrylic acid polymers; hydrophobically modified alkali swellable emulsions (HASE) such as hydrophobically modified acrylic acid copolymers; associative thickeners such as hydrophobically modified ethoxylated urethanes (HEUR); and cellulosic thickeners such as methyl cellulose ethers, hydroxymethyl cellulose, hydroxyethyl cellulose, hydrophobically-modified hydroxy ethyl cellulose, sodium carboxymethyl cellulose, sodium carboxymethyl 2-hydroxyethyl cellulose, 2-hydroxypropyl methyl cellulose, 2-hydroxyethyl methyl cellulose, 2-hydroxybutyl methyl cellulose, 2-hydroxyethyl ethyl cellulose, and 2-hydoxypropyl cellulose. Desirably, the thickener is based on HEUR. The thickener may be present at a concentration of from zero to 3% by weight, from 0.1% to 2.5% by weight, or from 0.3% to 2.0% by weight, based on total solids weight of the aqueous coating composition.

The aqueous coating composition of the present invention may comprise or be free of one or more neutralizers, which can be used in an amount sufficient to adjust the pH value of the aqueous coating composition for example, in a range of from 7 to 9. The neutralizers may include organic bases, inorganic bases, or mixtures thereof. Suitable neutralizers may include, for example, ammonia, sodium hydroxide, potassium hydroxide, zinc oxide, mono-ethanolamine, triethyl amine, diethyl amine, dimethyl amine, sodium borate, potassium borate, aluminum hydroxide, 2-amino-2-methyl-1-propanol, or combinations thereof. Desirably, 2-amino-2-methyl-1-propanol is used as the neutralizer.

In addition to the components described above, the aqueous coating composition of the present invention may further comprise any one or combination of the following additives: buffers, dispersants, humectants, mildewcides, biocides, anti-skinning agents, flowing agents, anti-oxidants, plasticizers, leveling agents, and grind vehicles. These additives may be present in a combined amount of from zero to 5% by weight or from 0.01% to 2% by weight, based on total solids weight of the aqueous coating composition.

The aqueous coating composition of the present invention may be prepared with techniques known in the coating art. The process of preparing the aqueous coating composition of the present invention may comprise by admixing the aqueous polyurethane dispersion, the amphoteric surfactant, and the light absorber and/or light stabilizer. Other optional components may also be added as described above. Components in the aqueous coating composition may be mixed in any order to provide the aqueous coating composition. Any of the above-mentioned optional components may also be added to the composition during or prior to the mixing to form the aqueous coating composition.

The aqueous coating composition of the present invention provides a coating obtained therefrom, i.e., a coating film after drying the aqueous coating composition applied to a substrate, with good peelability on a variety of surfaces, including surfaces of glass, tin, and coated metal substrates. "Good peelability" means a coating, before and even after exposure to 500 hours of QUV testing using a QUV accelerated weathering tester (also referred to as "peelability after QUV"), having a peelability level of 4 or higher or even 5, on surfaces of all substrates including glass, tin, and a metal precoated with a two-component polyurethane coating (described below). In addition, the coating is also desirable to have a high tensile strength so that the coating has sufficient durability during its service life. The aqueous coating composition, upon drying, provides the coating with a tensile strength of at least 8 MPa according to JG/T 172-2014, good water resistance with ratings of 4 or higher, and good transparency with a transmittance value of greater than 85% (desirably, 90% or more) and a haze value of less than 10% (desirably, 5% or less). All properties are measured according to the test methods described in the Examples section below.

The present invention also relates to a method of preparing a peelable coating (i.e., coating film) from the aqueous coating composition described above. The method comprises: (I) providing the aqueous coating composition described above, (II) applying the aqueous coating composition to a substrate, and (III) drying, or allowing to dry, the applied coating composition; thereby forming the peelable coating, desirably, a peelable transparent coating. "Transparent coating" means a coating that exhibits a transmittance value of great than 85% and a haze value of less than 10%, as measured using Transmittance and Haze Tester instrument according to ASTM D1003 (further details are provided in the Transparency Test below). The aqueous coating composition can be applied to, and adhered to, various substrates to provide protection the surface of the substrate against UV exposure and water exposure while is easily removable (i.e., showing good peelability). Examples of suitable substrates include wood, metals, plastics such as polyvinyl chloride and polyurethane, foams, stones, elastomeric substrates, glass, fabrics, concrete, tile, putty, or cementitious substrates. The surface of the substrate may either be the metal surface (e.g., the steel surface), or coated metal surface (also as "painted metal surface"), so that at least a portion of the surface of the substrate is covered by such a coating. For example, the substate can be a metal substrate coated with a coating (also as "pre-coat") that is other than the peelable coating of the present invention, such as an epoxy coating, a two-component polyurethane coating, or an aqueous acrylic coating, desirably, a two-component polyurethane coating. Particularly, the two-component polyurethane coating is prepared by a waterborne composition comprising (a) a hydroxy-containing acrylic polymer dispersion and (b) an isocyanate such as a hydrophilic aliphatic isocyanate based on HDI, which can be commercially available from Covestro Chemical as BAYHYDUR XP-2655. The aqueous coating composition of the present invention is subsequently applied onto said pre-coat, thereby forming the peelable coating on the pre-coat so that the pre-coat resides between the peelable coating and the substrate. Surprisingly, the aqueous coating composition can provide good peelability from various substates including a glass, tin, and polyurethane coated metal substrate, with peelability ratings of 4 or higher on all these substrates, even after UV exposure and water resistance tests (further details provided under the Examples section below). The aqueous coating composition is suitable for various applications such as marine and protective coatings, automotive coatings, traffic paint, exterior insulation and finish systems (EIFS), roof mastic, wood coatings, coil coatings, plastic coatings, can coatings, architectural coatings, and civil engineering coatings. The aqueous coating composition is particularly suitable for architectural coatings for exterior glass walls, and protective coatings for electronic devices and automotives.

Applying the aqueous coating composition can be conducted by incumbent means including brushing, dipping, rolling and spraying, desirably, spraying. The standard spray techniques and equipment for spraying such as air-atomized spray, air spray, airless spray, high volume low pressure spray, and electrostatic spray such as electrostatic bell application, and either manual or automatic methods can be used. Drying the aqueous coating composition can be conducted at room temperature (23 degree Celsius (°C)), or at an elevated temperature, for example, from greater than 23 °C to 60 °C, thereby forming a peelable film (this is, peelable coating).

### EXAMPLES

Some embodiments of the invention will now be described in the following Examples, wherein all percentages (%) are weight percentages relative to the composition, unless otherwise specified. Table 1 lists the materials for use in the coating composition samples described herein below. Note: "PUD" represents polyurethane dispersion.

**Table 1**

| **Component** | **Abbreviation** | **Description** | **Source** |
|---|---|---|---|
| PUD binder | PUD-1 | An aqueous polyurethane dispersion (solids content: 35%), based on isophorone diisocyanate (IPDI) and a polycaprolactone (PCL) polyol, stabilized by carboxylate group(s) existing in the polyurethane backbone. | Available as BAYDERM^{™} FINISH 91 UD from The Dow Chemical Company |
| | PUD-2 | An aqueous, anionic, polyurethane dispersion (solids content: 54.0-56.0%) that is derived from diphenylmethane diisocyanate (MDI), a polyester-based polyol, and a monofunctional polyalkylene ether. | Available from The Dow Chemical Company |
| | PUD-3 | An IPDI and polyether-based anionic polyurethane dispersion (solids content: 50.0%) | Available from The Dow Chemical Company |
| | PUD-4 | An aqueous, anionic, aliphatic polycarbonate ester based polyurethane dispersion (solids content: 37.0%) | Available as SiwoPUD-920F from Siwo Chemical |
| | PUD-5 | An aqueous, anionic, polyurethane dispersion (solids content: 35.0%) that is derived from IPDI, a PCL polyol, and a monofunctional polyalkylene ether | Available as PUD-509 from Huafon Chemical Co., Ltd. (China) |
| | PUD-6 | An aqueous, nonionic MDI and (polyester and polyether)-based polyurethane dispersion (solids content: 50%) | Available from The Dow Chemical Company |
| Wetting agent | CF-10 | A nonionic surfactant comprising poly(oxy-1,2-ethanediyl), alpha-(phenylmethyl)-omega-(1,1,3,3-tetramethylbutyl)phenoxy | Available as TRITON^{™} CF-10 from The Dow Chemical Company |
| Amphiphilic surfactant | CAB | Betaines including N-dodecyl-N,N-dimethylgly-cine and cocamidopropyl betaine (solids content: 35%) | Available as MIRATAINE^{™} CAB from Solvay Chemical |
| UV absorber | AQ1 | A mixture of benzo triazol and a hindered amine light stabilizer (HALS) | Available as EVERSORB AQ1 from Everlight Chemical |
| Neutralizer | AMP-95 | A multifunctional amino alcohol, 2-amino-2-methyl-1-propanol | Available as AMP-95 from ANGUS Chemical |
| Leveling agent | BYK-333 | A polyether-modified polydimethylsiloxane | Available as BYK-333 from BYK |
| Leveling agent | BYK-346 | A polyether-modified polydimethylsiloxane solution | Available as BYK-346 from BYK |
| Leveling agent | BYK-348 | A polyether-modified organosiloxane | Available as BYK-348 from BYK |
| Rheology modifier | RM-8W | A Nonionic, hydrophobically-modified ethylene oxide urethane (HEUR) rheology modifier | Available as ACRYSOL^{™} RM-8W from The Dow Chemical Company |
| Rheology modifier | Borchi Gel 0621 | A liquid polyurethane-based thickener | Available from OMG Borchers |
| Defoamer | 109F | A silicone antifoam emulsion | Available as DOWSIL^{™} 109F from The Dow Chemical Company |
| Defoamer | BYK-028 | A polysiloxane solution | BYK Chemical |
| Defoamer | TEGO 822 | A polyether siloxane co-polymer emulsion with fumed silica | Available as TEGO Foamex 822 from Evonik Chemical |
| Anionic surfactant | DS-4 | Sodium dodecyl benzene sulfonate | Available as RHODACAL DS-4AP from Solvay Chemical |
| Nonionic surfactant | 15-S-40 | A C₁₂-C₁₄ secondary alcohol ethoxylate | Available as TERGITOL^{™} 15-S-40 from The Dow Chemical Company |
| Matting agent | AT-3600 | Fumed silica matting powder with surface treated with polydimethylsilane | Available as ACEMATT 3600 from Evonik Chemical |
| Pigment | Carbon black | Carbon black | Available as Carbon Black MA100 from Mitsubishi Chemical |
| Transparent colorant | Phthalocyanin e green | A waterborne phthalocyanine green paste (solids content: 15%) | Available from Zhejiang Namei Material Technology Co., Ltd. (China) |
| Acrylic binder | ROVACE 661 emulsion | A vinyl-acrylic copolymer emulsion (solids content: 55%) with a glass transition temperature of 10 °C as measured by differential scanning calorimetry (DSC) | Available as ROVACE^{™} 661 from The Dow Chemical Company |
| Hollow opaque polymer | Ultra E polymer | Opaque hollow polymeric spheres comprising polymeric particles with core-shell structure | Available as ROPAQUE^{™} Ultra-E opaque polymer from The Dow Chemical Company |
| Coalescent | Texanol | Ester alcohol | Available as TEXANOL^{™} from Eastman Chemical Company |
| Coalescent | DMM | Dipropylene glycol dimethyl ether | The Dow Chemical Company |
| Biocide | LX-150 | An isothiazolone-based biocide | Available as KATHON^{™} LX-150 from Lanxess |
| Hydroxyl acrylic dispersion | PROSPERSE 500 dispersion | A waterborne hydroxyl (OH) acrylic polymer dispersion (solids content: 45.0%) with an OH content of 3.8% by weight based on solids weight | Available as PROSPERSE^{™} 500 from The Dow Chemical Company |
| Isocyanate | XP-2655 | A hydrophilic aliphatic polyisocyanate based on hexamethylene diisocyanate (HDI) (solids content: 100%) | Available as Bayhydur XP-2655 from Covestro Chemical |

| | | | |
|---|---|---|---|
| *BAYDERM, TRITON. ACRYSOL, DOWSIL, TERGITOL, ROVACE, ROPAQUE, and PROSPERSE are all trademarks of The Dow Chemical Company.* | | | |

### IEs 1-8 Aqueous Coating Compositions

Formulations for IE samples are given in Table 2, with the amount of each component reported in grams (g). In the first step, a PUD binder was added into a tank, and then neutralizer was added to neutralize the PUD binder to a pH value in a range of 7 to 9 with stirring. Secondly, a mixture of surfactant and light absorber was fed into the tank over 30 min. Wetting agent was added over 20 minutes (min) with stirring, followed by leveling agent, rheology modifier, and deionized (DI) water if used. Finally, biocide and defoamer, if present, were added, thereby forming aqueous coating compositions. Stirring was conducted using a high-speed disperser at a speed ranging from 400 to 800 revolutions per minute (RPM).

### CEs 1-13 and 15 Aqueous Coating Compositions

CEs 1-13 and 15 samples were prepared substantially the same as IEs 1-8 above, according to formulations given in Table 3, with the amount of each component reported in grams (g). For preparing samples comprising pigment and/or matting agent, the pigment and/or matting agent were added right after the wetting agent.

### CE 14 Aqueous Coating Composition

Formulations for CE 14 sample are given in Table 3, with the amount of each component reported in grams. CE 14 sample was prepared using a procedure similar to IEs 1-8 above, except the first step (the step before adding a mixture of surfactant and light absorber) was conducted as follows:
AMP-95 was added into the acrylic latex binder to neutralize the binder to a pH value of 7 to 9. Ultra E opaque polymer was added into the binder over 30 min under agitation using a high speed disperser at a speed ranging from 400-800 RPM. Coalescent was then added over 20 min.

The above obtained coating composition samples were evaluated for peelability, tensile strength, water resistance, and transparency properties according to the following test methods:

### Peel Test

Peel test is used for determining the ease of removal, or peelability, of films (i.e., coating) formed from coating compositions. A test coating composition was sprayed onto a glass, tin, and PU-coated Q-PANEL steel substate, respectively. The resulting panels were allowed to dry at room temperature for 7 days to obtain coated panels with dry films of thickness of 20-50 µm. Glass, tin, and steel substrates are all available from Q-Lab. The PU-coated steel was prepared by mixing PROSPERSE 500 dispersion with XP-2655 isocyanate at a molar ratio of NCO/OH of 1.2:1, and then applying the resulting two-component (2K) waterborne PU composition onto the steel, followed by curing the PU composition to form the steel precoated by a PU coating (also as "PU-coated steel"). When the PU-coated steel was used as the substrate, the test coating composition was applied onto the PU coating layer of the PU-coated steel.

Some of the obtained coated panels were directly evaluated for peelability properties of the films (denoted as "Peelability before QUV") according to the peel test and rating criteria described below, while some coated panels were firstly exposed to QUV testing prior to the peel test. The QUV testing was conducted by placing coated panels into a QUV chamber of a QUV accelerated weathering tester (Model: QUV/SPRAY-67 manufactured by Q-Lab Co.) for 500 hours and then taking out and cooling down to room temperature in 24 hours. The obtained coated panels after the QUV testing/exposure were then evaluated according to the peel test and rating criteria described below to determine peelability properties, denoted as "Peelability after QUV".

Films on the coated panels (before QUV and after QUV exposure, respectively) were hand peeled and rated on a scale of 1 to 5 for ease of removal (that is, peelability):
1 - film is very difficult to be removed by hand and tends to break into pieces during the removal process if removed with the aid of tools;
2 - film is difficult to be hand peeled off and tends to break into pieces instead of peeling away as a continuous sheet;
3 - film can be hand peeled off with much effort while leaving more than 20% area residual pieces on the panel;
4 - film can be hand peeled off with little effort and comes off as a continuous sheet or leaving less than 5% area residual pieces; and
5 - film comes off almost effortlessly as a continuous sheet (i.e., the film does not break) while leaving no residue.

Acceptable ratings for both Peelability before QUV and Peelability after QUV on all glass, tin, and PU-coated steel substrates all need to be 4 or higher. The higher the rating, the better the peelability properties.

### Tensile Test

A test coating composition was applied onto a release paper using an applicator to produce a wet film of thickness of 300 µm and then dried for 7 days in a controlled temperature room (CTR) (23±2 °C, 50%-60% relative humidity). The obtained dry film of thickness in a range of 50-70 µm was peeled from the release paper by hand, turned over, and allowed to dry in the CTR for another 7 days. The resulting dry film was cut into dog-bone specimens which were measured using a Universal Testing Machine (AI-7000M, Gotech Testing Machines Co., Ltd.) according to JG/T 172-2005 method. Acceptable tensile strength is at least 8 MPa.

### Water Resistance Test

A test coating composition was applied onto a glass substrate from Q-Lab using an applicator to produce a wet film of thickness of 200 µm and then dried at room temperature for 7 days to form a coated panel with a dry film (thickness: 50 µm). The coated panel was immersed into water for 24 hours and then taken out for visually inspection of coating films. The appearance of the coating films was rated on a scale of 1-5 as described below:
1 - film is completely broken and off from substrate when the panel is taken out of water;
2 - film becomes white, with wrinkles, and starts to be partially broken;
3 - film becomes white, with many wrinkles; and, after 2 to 4 hours, the film cannot recover to the appearance before water immersion;
4 - film becomes white, with no wrinkle; and, after 2 to 4 hours, the film can recover to the appearance before water immersion;
5 - film shows no difference comparing with the appearance before water immersion;

If the appearance of coating films on a coated panels after water immersion is rated 4 or higher, such panels were further dried for 7 days at room temperature and peelability properties were evaluated and rated according to the same rating criteria as described in the Peel Test above. If the appearance of a coated panels after water immersion is rated lower than 4, the test stopped.

A coated panel with appearance and peelability both rated as 4 or higher passes the water resistance test, indicating good water resistance. If a panel shows either (i) appearance rating of 3 or lower, or (ii) appearance rating of 4 or higher and later pealability rating of 3 or lower, the panel fails the water resistance test, indicating poor water resistance.

### Transparency Test

A test coating composition was applied onto a release paper using an applicator to produce a wet film of thickness of 200 µm, and then dried at room temperature for 7 days. After drying, the obtained coating films with a dry film thickness of 50-70 µm were peeled from the release paper by hand. Transmittance and haze values of the coating films were measured using Transmittance and Haze Tester instrument (YH1000 from Shenzhen Threenh Technology Co., Ltd. (China)) according to ASTM D1003. Acceptable transparency properties require a transmittance value of great than 85% (>85%) and a haze value of lower than 10% (<10%).

Characterization results of the samples of IEs 1-8 and CEs 1-15 are given in Tables 2 and 3, respectively. As shown in Table 2, IEs 1-8 samples provided good peelability on surfaces of all the substrates (i.e., glass, tin, and PU-coated steel) with each rating ≥ 4 before and even after QUV exposure, desired tensile strength (at least 8 MPa), and good water resistance (rating ≥ 4), at the same time, showed good transparency properties as indicated by a transmittance value >85% and a haze value <10%. All IE samples provided transparent coating films (green films for IE 4).

As shown in Table 3, CEs 1, 3, and 5 samples were used to substantially repeat Exs 3, 1, and 2 in US11008468B2, respectively, using similar types of PUDs, surfactants, and defoamers. The coating films made from these samples were all black opaque films (not transparent) and failed to meet the peelability requirements for all the substrates. It is well noted that even when omitting the pigment and matting agent (CEs 2, 4, and 6), transparency properties of the resulting coating films were improved, but these samples still couldn't pass the peel tests for all substrates at the same time (e.g., pealability ratings on one or more of the substrates were less than 4).

As compared to IE 1, CE 7 comprising PUD-4 based on polycarbonate ester polyol and IPDI showed poor peelability properties (before and/or after QUV) on all the three types of substrates. CE 8 comprising PUD-3 derived from polyether polyol and IPDI demonstrated poor pealability on the PU-coated steel (before QUV), poor peelability after QUV exposure on the tin and PU-coated steel, poor water resistance, and unacceptable transparency properties (such as a high haze value). Samples comprising DS-4 anionic surfactant (CE 9) or 15-S-40 nonionic surfactant (CE 10) (instead of an amphoteric surfactant) both demonstrated much poorer pealability on all substrates before or after QUV exposure than IE 1 sample comprising CAB amphiphilic surfactant. CE 11 sample comprising aromatic polyurethane dispersion (PUD-2) provided unsatisfactory peelability properties on one or more of the substrates (before and after UV exposure), as well as worse transparency and poorer water resistance than IEs samples. CE 12 comprising a polyurethane dispersion (PUD-5) derived from a monofunctional polyalkylene ether at least failed to meet the requirements for peelability on the tin and PU-coated steel substrates, peelability after QUV exposure on all substrates, and water resistance. Samples comprising MDI and (polyether and polyester)-based nonionic PUD-6 (CE 13) or 15% of CAB (CE 15) demonstrated worse peelability on all the substrates (before and after UV exposure), lower tensile strength, and poorer transparency properties than IEs samples. The acrylic coating system of CE 14 provided non-transparent coating films. In contrast, IE samples of the present invention provided transparent coating films with significantly improved tensile strength and water resistance without hurting peelability properties as compared to CE 14.

**Table 2**

| ***Component*** | | **IE 1** | **IE 2** | **IE 3** | **IE 4** | **IE 5** | **IE 6** | **IE 7** | **IE 8** |
|---|---|---|---|---|---|---|---|---|---|
| PUD-1 (35%) | | 95 | 80 | 70 | 60 | 85 | 80 | 90 | 80 |
| AMP-95 | | 1 | 1 | 1 | 1 | 1 | 1 | 1 | 1 |
| Transparent colorant (15%) | | 0 | 2 | 0 | 0.5 | 0 | 0 | 0 | 0 |
| CAB (35%) | | 0.5 | 3 | 2 | 5 | 0.5 | 6 | 2 | 4 |
| AQI | | 1 | 5 | 3 | 0.6 | 2 | 4 | 0.2 | 6 |
| CF-10 | | 0.2 | 0.2 | 0.2 | 0.2 | 0.2 | 0.2 | 0.2 | 0.2 |
| BYK-333 | | 0.3 | 0.5 | 0.5 | 0.5 | 0.5 | 0.5 | 0.5 | 0.5 |
| DI water | | 0 | 3.8 | 15 | 22.2 | 5.3 | 3.3 | 2.1 | 3.3 |
| RM-8W | | 1 | 3 | 7.3 | 9 | 4.5 | 4 | 3 | 4 |
| 109F | | 0.5 | 0.5 | 0.5 | 0.5 | 0.5 | 0.5 | 0.5 | 0.5 |
| LX-150 | | 0.5 | 0.5 | 0.5 | 0.5 | 0.5 | 0.5 | 0.5 | 0.5 |

| ***Characterization*** | | | | | | | | | |
|---|---|---|---|---|---|---|---|---|---|
| Peelability before QUV | Glass | 5 | 5 | 5 | 5 | 5 | 5 | 5 | 5 |
| | Tin | 5 | 5 | 5 | 5 | 5 | 5 | 5 | 5 |
| | PU-coated steel | 5 | 5 | 5 | 5 | 5 | 5 | 5 | 5 |
| Pealability after QUV | Glass | 5 | 5 | 5 | 5 | 5 | 5 | 5 | 5 |
| | Tin | 5 | 4 | 4 | 4 | 4 | 4 | 4 | 4 |
| | PU-coated steel | 4 | 4 | 4 | 4 | 4 | 4 | 4 | 4 |
| Transmittance, % | | 93 | 90 | 93 | 92 | 94 | 93 | 92 | 94 |
| Haze, % | | 2 | 5 | 3 | 3 | 3 | 4 | 3 | 3 |
| Tensile strength, MPa | | 8 | 8 | 8 | 8 | 8 | 8 | 8 | 8 |
| Water resistance | | 5 | 5 | 5 | 5 | 5 | 5 | 5 | 5 |

**Table 3**

| ***Component*** | | CE 1 | CE 2 | CE 3 | CE 4 | CE 5 | CE 6 | CE 7 | CE 8 | CE 9 | CE 10 | CE 11 | CE 12 | CE 13 | CE 14 | CE 15 |
|---|---|---|---|---|---|---|---|---|---|---|---|---|---|---|---|---|
| PUD-1 (35%) | | 76.9 | 76.9 | | | | | | | 90 | 90 | | | | | 70 |
| PUD-4 (37%) | | | | 89.83 | 89.83 | | | 70 | | | | | | | | |
| PUD-3 (50%) | | | | | | 70.33 | 70.33 | | 70 | | | | | | | |
| PUD-2 (35%) | | | | | | | | | | | | 70 | | | | |
| PUD-5 (35%) | | | | | | | | | | | | | 70 | | | |
| PUD-6 (50%) | | | | | | | | | | | | | | 70 | | |
| ROVACE 661 (55%) | | | | | | | | | | | | | | | 80 | |
| AMP-95 | | | | | | | | 1 | 1 | 1 | 1 | 1 | 1 | 1 | 1 | 1 |
| Ultra E polymer (35%) | | | | | | | | | | | | | | | 7.8 | |
| Texanol | | | | | | | | | | | | | | | 2 | |
| CAB (35%) | | | | | | | | 2 | 2 | 0 | 0 | 2 | 2 | 2 | 2 | 15 |
| DS-4 (23%) | | | | | | | | | | 2 | | | | | | |
| 15-S-40 (70%) | | | | | | | | | | | 2 | | | | | |
| AQ1 | | | | | | | | 3 | 3 | 0.2 | 0.2 | 3 | 3 | 3 | 0.5 | 3 |
| CF-10 | | | | | | | | 0.2 | 0.2 | 0.2 | 0.2 | 0.2 | 0.2 | 0.2 | 0.2 | 0.2 |
| BYK-333 | | | | | | | | 0.5 | 0.5 | 0.5 | 0.5 | 0.5 | 0.5 | 0.5 | 0.5 | 0.5 |
| BYK-348 | | 0.09 | 0.09 | | | | | | | | | | | | | |
| BYK-346 | | | | 0.74 | 0.74 | 0.72 | 0.72 | | | | | | | | | |
| DI water | | 13.71 | 17.13 | 3.34 | 8.87 | 19.87 | 28.04 | 15 | 15 | 2.1 | 2.1 | 15 | 15 | 15 | 2 | 5.3 |
| RM-8W | | | | | | | | 7.3 | 7.3 | 3 | 3 | 7.3 | 7.3 | 7.3 | 1 | 5 |
| Borchi Gel 0621 | | 0.44 | 0.44 | | | | | | | | | | | | | |
| 109F | | | | | | | | 0.5 | 0.5 | 0.5 | 0.5 | 0.5 | 0.5 | 0.5 | 0.5 | *0.5* |
| BYK-028 | | 0.18 | 0.18 | | | | | | | | | | | | | |
| TEGO 822 | | | | 0.56 | 0.56 | 0.9 | 0.9 | | | | | | | | | |
| LX-150 | | | | | | | | 0.5 | 0.5 | 0.5 | 0.5 | 0.5 | 0.5 | 0.5 | 0.5 | *0.5* |
| Carbon black | | 2.23 | 0 | 2.58 | 0 | 5.99 | 0 | | | | | | | | | |
| DMM | | 4.54 | 4.54 | | | | | | | | | | | | | |
| AT-3600 | | 1.91 | 0 | 2.95 | 0 | 2.18 | 0 | | | | | | | | | |

| ***Characterization*** | | | | | | | | | | | | | | | | |
|---|---|---|---|---|---|---|---|---|---|---|---|---|---|---|---|---|
| Peelability before QUV | Glass | 2 | 4 | 1 | 1 | 4 | 5 | 3 | 5 | 2 | 1 | 5 | 4 | 2 | 5 | 3 |
| | Tin | 1 | 2 | 1 | 1 | 2 | 4 | 1 | 4 | 2 | 1 | 4 | 3 | 2 | 5 | |
| | PU-coated steel | 1 | 1 | 1 | 1 | 2 | 3 | 1 | 3 | 3 | 1 | 3 | 1 | 2 | 4 | 2 |
| Pealability after QUV | Glass | 1 | 3 | 1 | 1 | 3 | 4 | 1 | 4 | 1 | 1 | 4 | 3 | 2 | 5 | 2 |
| | Tin | 1 | 2 | 1 | 1 | 2 | 2 | 1 | 2 | 1 | 1 | 3 | 2 | 1 | 4 | 2 |
| | PU-coated steel | 1 | 1 | 1 | 1 | 2 | 2 | 1 | 2 | 2 | 1 | 3 | 1 | 1 | 4 | 2 |
| Transmittance, % | | 0 | 92 | 0 | 88 | 0 | 88 | 88 | 89 | 93 | 92 | 80 | 90 | 84 | 0 | 78 |
| Haze, % | | 0 | 3 | 0 | 5 | 0 | 23 | 2 | 22 | 2 | 2 | 25 | 3 | 15 | 0 | 12 |
| Tensile strength, MPa | | / | / | | | | | | / | / | / | 5 | 8 | 1 | 3 | 6 |
| Water resistance | | 5 | 5 | 5 | 5 | 5 | 2 | 5 | 2 | 5 | 5 | 1 | 1 | 2 | 3 | 2 |

## Claims

1. An aqueous coating composition, comprising:
(A) an aqueous polyurethane dispersion comprising a reaction product of components (i) and (ii):
(i) an isocyanate component comprising an aliphatic or cycloaliphatic polyisocyanate comprising at least two isocyanate groups, and
(ii) an isocyanate-reactive component comprising: (ii-a) a polyol comprising a lactone-based polyester polyol, (ii-b) an anionic emulsifier comprising at least one isocyanate-reactive group and an anionic group or potentially anionic group, and (ii-c) from zero to less than 1.0% by weight of a monofunctional polyalkylene ether containing one hydroxyl or amino group, based on the total weight of the isocyanate component and isocyanate-reactive component;
(B) an amphoteric surfactant having an isoelectric point at pH 3 to pH 8, that present in an amount of from 0.1% to 10.0% by solids weight, based on total solids weight of the aqueous coating composition; and
(C) a light absorber, a light stabilizer, or mixtures thereof.

2. The aqueous coating composition of claim 1, wherein the isocyanate component comprises isophorone diisocyanate.

3. The aqueous coating composition of claim 1, wherein the lactone-based polyester polyol is a polycaprolactone polyol.

4. The aqueous coating composition of claim 1, wherein (ii-a) the polyol comprises 80% to 100% by weight of the lactone-based polyester polyol, based on the total weight of polyols in the isocyanate-reactive component.

5. The aqueous coating composition of any one of claims 1-4, wherein the anionic emulsifier is selected from a dihydroxyalkylcarboxylic acid, a dihydroxysulfonic acid, a dihydroxyphosphonic acid, or mixtures thereof.

6. The aqueous coating composition of any one of claims 1-4, wherein the amphoteric surfactant is a compound selected from an amino carboxylic acid; an amino carboxylic acid substituted with fluorocarbon substituents, siloxane substituents, or combinations thereof; an amphoteric imidazoline derivative; an amphoteric imidazoline derivative substituted with fluorocarbon substituents, siloxane substituents, or combinations thereof; betaine; a betaine substituted with fluorocarbon substituents, siloxane substituents, or combinations thereof; or mixtures thereof.

7. The aqueous coating composition of any one of claims 1-4, comprising from 0.1% to 15% by weight of the light absorber, the light stabilizer, or mixtures thereof, based on total solids weight of the aqueous coating composition.

8. The aqueous coating composition of any one of claims 1-4, comprising less than 1% by solids weight of a filler, based on total solids weight of the aqueous coating composition.

9. The aqueous coating composition of any one of claims 1-4, wherein the aqueous polyurethane dispersion is present at a concentration of from 60% to 98% by solids weight, based on total solids weight of the aqueous coating composition.

10. A method of preparing a peelable coating, comprising:
(I) providing the aqueous coating composition of any one of claims 1-9,
(II) applying to the surface of a substrate the aqueous coating composition, and
(III) drying, or allowing to dry, the applied aqueous coating composition; thereby forming the peelable coating.

## Patentansprüche

1. Wässrige Beschichtungszusammensetzung, umfassend:
(A) eine wässrige Polyurethandispersion, umfassend ein Reaktionsprodukt von Komponenten (i) und (ii):
(i) eine Isocyanatkomponente, umfassend ein aliphatisches oder ein cycloaliphatisches Polyisocyanat, umfassend mindestens zwei Isocyanatgruppen, und
(ii) eine Isocyanat-reaktive Komponente, umfassend: (ii-a) ein Polyol, umfassend ein auf Lacton basierendes Polyesterpolyol, (ii-b) einen anionischen Emulgator, umfassend mindestens eine Isocyanat-reaktive Gruppe und eine anionische Gruppe oder eine potenziell anionische Gruppe, und (ii-c) zu null bis weniger als 1,0 Gew.-% einen monofunktionellen Polyalkylenether, der eine Hydroxyl- oder eine Aminogruppe enthält, basierend auf dem Gesamtgewicht der Isocyanatkomponente und der Isocyanat-reaktiven Komponente;
(B) ein amphoteres Tensid, das einen isoelektrischen Punkt bei pH 3 bis pH 8 aufweist, das in einer Menge von 0,1 % bis 10,0 %, bezogen auf das Feststoffgewicht, basierend auf dem Gesamtfeststoffgewicht der wässrigen Beschichtungszusammensetzung, vorhanden ist; und
(C) einen Lichtabsorber, einen Lichtstabilisator oder Mischungen davon.

2. Wässrige Beschichtungszusammensetzung nach Anspruch 1, wobei die Isocyanatkomponente Isophorondiisocyanat umfasst.

3. Wässrige Beschichtungszusammensetzung nach Anspruch 1, wobei das auf Lacton basierende Polyesterpolyol ein Polycaprolactonpolyol ist.

4. Wässrige Beschichtungszusammensetzung nach Anspruch 1, wobei (iia) das Polyol zu 80 Gew.-% bis 100 Gew.-% das auf Lacton basierende Polyesterpolyol, basierend auf dem Gesamtgewicht der Polyole in der Isocyanat-reaktiven Komponente, umfasst.

5. Wässrige Beschichtungszusammensetzung nach einem der Ansprüche 1 bis 4, wobei der anionische Emulgator ausgewählt ist aus einer Dihydroxyalkylcarbonsäure, einer Dihydroxysulfonsäure, einer Dihydroxyphosphonsäure oder Mischungen davon.

6. Wässrige Beschichtungszusammensetzung nach einem der Ansprüche 1 bis 4, wobei das amphotere Tensid eine Verbindung ist, ausgewählt aus einer Aminocarbonsäure; einer Aminocarbonsäure, die mit Fluorkohlenstoffsubstituenten, Siloxansubstituenten oder Kombinationen davon substituiert ist; einem amphoteren Imidazolinderivat; einem amphoteren Imidazolinderivat, das mit Fluorkohlenstoffsubstituenten, Siloxansubstituenten oder Kombinationen davon substituiert ist; Betain; einem Betain, das mit Fluorkohlenstoffsubstituenten, Siloxansubstituenten oder Kombinationen davon substituiert ist; oder Mischungen davon.

7. Wässrige Beschichtungszusammensetzung nach einem der Ansprüche 1 bis 4, umfassend zu 0,1 Gew.-% bis 15 Gew.-% den Lichtabsorber, den Lichtstabilisator oder Mischungen davon, basierend auf dem Gesamtfeststoffgewicht der wässrigen Beschichtungszusammensetzung.

8. Wässrige Beschichtungszusammensetzung nach einem der Ansprüche 1 bis 4, umfassend zu weniger als 1 %, bezogen auf das Feststoffgewicht, einen Füllstoff, basierend auf dem Gesamtfeststoffgewicht der wässrigen Beschichtungszusammensetzung.

9. Wässrige Beschichtungszusammensetzung nach einem der Ansprüche 1 bis 4, wobei die wässrige Polyurethandispersion in einer Konzentration von 60 % bis 98 %, bezogen auf das Feststoffgewicht, basierend auf dem Gesamtfeststoffgewicht der wässrigen Beschichtungszusammensetzung, vorhanden ist.

10. Verfahren zum Herstellen einer abziehbaren Beschichtung, umfassend:
(I) Bereitstellen der wässrigen Beschichtungszusammensetzung nach einem der Ansprüche 1 bis 9,
(II) Aufbringen der wässrigen Beschichtungszusammensetzung auf die Oberfläche eines Substrats und
(III) Trocknen oder Trocknenlassen der aufgebrachten wässrigen Beschichtungszusammensetzung; wobei dadurch die abziehbare Beschichtung ausgebildet wird.

## Revendications

1. Composition de revêtement aqueuse, comprenant :
(A) une dispersion aqueuse de polyuréthane comprenant un produit de réaction des composants (i) et (ii) :
(i) un composant isocyanate comprenant un polyisocyanate aliphatique ou cycloaliphatique comprenant au moins deux groupes isocyanates, et
(ii) un composant réactif à l'isocyanate comprenant : (ii-a) un polyol comprenant un polyol de polyester à base de lactone, (ii-b) un émulsifiant anionique comprenant au moins un groupe réactif aux isocyanates et un groupe anionique ou potentiellement anionique, et (ii-c) de zéro à moins de 1,0 % en poids d'un éther monofonctionnel polyalkylène contenant un hydroxyle ou un groupe amino, sur la base du poids total du composant isocyanate et un composant réactif aux isocyanates ;
(B) un agent tensioactif amphotère ayant un point isoélectrique à pH 3 à pH 8, qui est présent en une quantité allant de 0,1 % à 10,0 % en poids de matières solides, sur la base du poids total de matières solides de la composition de revêtement aqueuse ; et
(C) un absorbeur de lumière, un stabilisateur de lumière ou leurs mélanges.

2. Composition de revêtement aqueuse selon la revendication 1, dans laquelle le composant isocyanate comprend un diisocyanate isophorone ;

3. Composition de revêtement aqueuse selon la revendication 1, dans laquelle le polyol de polyester à base de lactone est un polyol de polycaprolactone.

4. Composition de revêtement aqueuse selon la revendication 1, dans laquelle (ii-a) le polyol comprend 80 % à 100 % en poids du polyol de polyester à base de lactone, sur la base du poids total de polyols dans le composant réactif aux isocyanates.

5. Composition de revêtement aqueuse selon l'une quelconque des revendications 1 à 4, dans laquelle l'émulsifiant anionique est choisi parmi un acide dihydroxyalkylcarboxylique, un acide dihydroxysulfonique, un acide dihydroxyphosphonique, ou des mélanges de ceux-ci.

6. Composition de revêtement aqueuse selon l'une quelconque des revendications 1 à 4, dans laquelle l'agent tensioactif amphotère est un composé choisi parmi un acide carboxylique aminé ; un acide amino carboxylique substitué par des substituants fluorocarbonés, des substituants siloxane, ou des combinaisons de ceux-ci ; un dérivé d'imidazoline amphotère ; un dérivé d'imidazoline amphotère substitué par des substituants de fluorocarbone, des substituants de siloxane, ou des combinaisons de ceux-ci ; bétaïne ; une bétaïne substituée par des substituants fluorocarbonés, des substituants de siloxane, ou des combinaisons de ceux-ci ; ou des mélanges de ceux-ci.

7. Composition aqueuse de revêtement selon l'une quelconque des revendications 1 à 4, comprenant de 0,1 % à 15 % en poids de l'absorbeur de lumière, du stabilisateur de lumière, ou leurs mélanges, sur la base du poids total des solides de la composition aqueuse de revêtement.

8. Composition aqueuse de revêtement selon l'une quelconque des revendications 1 à 4, comprenant moins de 1 % en poids des solides d'un agent de remplissage, sur la base du poids total des solides de la composition aqueuse de revêtement.

9. Composition aqueuse de revêtement selon l'une quelconque des revendications 1 à 4, dans laquelle la dispersion aqueuse de polyuréthane est présente à une concentration allant de 60 % à 98 %, en poids total des solides, sur la base du poids total des solides de la composition aqueuse de revêtement.

10. Procédé de préparation d'un revêtement pelable, comprenant :
(I) la fourniture d'une composition aqueuse de revêtement selon l'une quelconque des revendications 1 à 9,
(II) l'application sur la surface d'un substrat de la composition aqueuse de revêtement, et
(III) le séchage ou le fait de laisser sécher la composition de revêtement aqueuse appliquée ; formant ainsi le revêtement pelable.
